# EUROPEAN PATENT APPLICATION

(11) **EP 4 683 040 A1**
(43) Date of publication of application: **21.01.2026**
(21) Application number: 25185193.7
(22) Date of filing: 25.06.2025
(51) Int. Cl.: H01M 10/54, H01M 4/75, H01M 10/04, H01M 10/42, H01M 50/184, H01M 50/186, H01M 50/308, H01M 50/691, H01M 10/615, H01M 10/657, H01M 4/02

(54) **METHOD OF PRODUCING RECYCLED MATERIAL, AND BIPOLAR BATTERY**

(30) Priority: 18.07.2024 JP 2024114743
(71) Applicant: TOYOTA JIDOSHA KABUSHIKI KAISHA, Toyota-shi, Aichi-ken 471-8571 (JP)
(72) Inventor: Fujishima, Seigo, Toyota-shi 471-8571 (JP); Abe, Takeshi, Toyota-shi 471-8571 (JP); Kato, Kazuhito, Toyota-shi 471-8571 (JP); Miki, Nariaki, Toyota-shi 471-8571 (JP); Morioka, Satoshi, Toyota-shi 471-8571 (JP); Yokoyama, Tomohiro, Toyota-shi 471-8571 (JP); Kato, Masashi, Toyota-shi 471-8571 (JP)
(74) Representative: Kuhnen & Wacker Patent- und Rechtsanwaltsbüro PartG mbB

(57) **Abstract**

A method of producing a recycled material includes the following (a) to (d). (a) Preparing a bipolar battery that includes an electrolytic solution and that is sealed. (b) Forming a gas outlet hole on the bipolar battery. (c) Vaporizing at least some of the electrolytic solution by heating the bipolar battery by induction heating. (d) Retrieving the vaporized electrolytic solution from the gas outlet hole.

## Description

### BACKGROUND OF THE INVENTION

### 1. Field of the Invention

The present disclosure relates to a method of producing a recycled material, and a bipolar battery.

### 2. Description of Related Art

Japanese Unexamined Patent Application Publication No. 2012-204000 (JP 2012-204000 A) discloses that a battery pack is heated and thereby a thermolysis product released from the battery pack is retrieved.

### SUMMARY OF THE INVENTION

It is required that an unwanted battery be dismantled and thereby various materials be retrieved from the battery and be recycled. By retrieving an electrolytic solution from the battery before the dismantlement of the battery, it is expected that the working efficiency at the time of the dismantlement is improved. Conventionally, for example, the heating of the battery from the exterior by causing heating steam (heat medium) to make contact with the battery and the retrieval of the vaporized electrolytic solution have been proposed.

A bipolar battery is configured by laminating a plurality of bipolar electrodes. A structure in which a plurality of cells is isolated from each other by sealing gaps among the bipolar electrodes has been studied. In the case where the bipolar battery having the structure is heated by the contact with the heat medium, it is hard for heat transfer to occur among the partitioned cells, and therefore, there is a possibility that heating efficiency is low. Particularly, at a position closer to the center in a lamination direction, the heating efficiency is lower, and therefore, it is considered to be more difficult to retrieve the electrolytic solution.

An object of the present disclosure is to provide a method for retrieving an electrolytic solution from a bipolar battery.
1. An aspect of the present disclosure is a method of producing a recycled material. The method of producing the recycled material includes the following (a) to (d).
   (a) Preparing a bipolar battery that includes an electrolytic solution and that is sealed.
   (b) Forming a gas outlet hole on the bipolar battery.
   (c) Vaporizing at least some of the electrolytic solution by heating the bipolar battery by induction heating.
   (d) Retrieving the vaporized electrolytic solution from the gas outlet hole.

The bipolar battery includes a plurality of bipolar electrodes and a seal material. The bipolar electrodes are laminated in a plane-perpendicular direction. Each of the bipolar electrodes includes a positive electrode layer, a current collecting foil, and a negative electrode layer in this order in the plane-perpendicular direction. At least a part of the seal material fills a gap between the adjacent bipolar electrodes, such that a plurality of cells is provided. The cells are isolated from each other. The cells include the positive electrode layer, the negative electrode layer, and the electrolytic solution.

In the (b), the gas outlet hole is formed on each of the cells.

In the present disclosure, the gas outlet hole (the outlet of gas) is formed on each of the cells. That is, a retrieval route of the electrolytic solution is formed for each cell. Furthermore, in the present disclosure, the bipolar battery is heated by the induction heating (IH). With the IH, each of the bipolar electrodes (current collecting foils) can be heated in the battery. That is, each of the cells can be heated from the interior. Even a cell at a center in a lamination direction can be sufficiently heated. Accordingly, it is thought that the electrolytic solution can be retrieved from each of the cells.

2. The method of producing a recycled material according to the " 1" may include the following configuration, for example. The (c) may include performing the induction heating while compressing the bipolar battery in the plane-perpendicular direction.

Due to the vaporization of the electrolytic solution, the internal pressure of the cell can rise. Due to the rise in internal pressure, the cell expands. When the cell expands, there is a possibility that the heating efficiency decreases. The cells are laminated in the plane-perpendicular direction (lamination direction). By the compression of the bipolar battery in the plane-perpendicular direction, each of the cells can be compressed. The expansion of each cell is restrained, and thereby, the heating efficiency is improved. Therefore, it is expected that the time required for the vaporization of the electrolytic solution is shortened.

3. The method of producing a recycled material according to the "1" may include the following configuration, for example. The (c) may include moving a heating coil along an outer surface of the bipolar battery. The bipolar battery may include a first end portion and a second end portion in one direction orthogonal to the plane-perpendicular direction. The second end portion may be positioned on the opposite side of the first end portion. The gas outlet hole may be formed at the first end portion. The heating coil may start from the first end portion and move toward the second end portion. A groove may be provided on at least one of the positive electrode layer and the negative electrode layer. The groove may extend along a movement direction of the heating coil.

For example, when the whole of the bipolar battery is heated at one time, the vaporization of the electrolytic solution occurs from the whole of the cell in an in-plane direction, and all of the vaporized electrolytic solution moves toward the gas outlet hole (outlet) together. As a result, there is a possibility that the congestion of the electrolytic solution (gas) occurs and the efficiency of the emission of the gas from the gas outlet hole decreases. The IH is executed by the heating coil. The bipolar battery is sequentially heated from a gas outlet hole side. Thereby, the electrolytic solution is sequentially vaporized, while movement routes of the electrolytic solution (gas) are secured. Consequently, a smooth movement of the electrolytic solution (gas) is expected. Furthermore, the groove is formed on the electrode layer along a movement route of the heating coil, and thereby, it is expected that the electrolytic solution (gas) moves through the groove. Thereby, the emission efficiency can be further improved.

4. An aspect of the present disclosure is a bipolar battery. The bipolar battery includes: a plurality of bipolar electrodes; a seal material; and an electrolytic solution. The bipolar electrodes are laminated in a plane-perpendicular direction. Each of the bipolar electrodes includes a positive electrode layer, a current collecting foil, and a negative electrode layer in this order in the plane-perpendicular direction. At least a part of the seal material fills a gap between the adjacent bipolar electrodes, such that a plurality of cells is provided. The cells are isolated from each other. The cells include the positive electrode layer, the negative electrode layer, and the electrolytic solution. The bipolar electrodes include a first bipolar electrode and a second bipolar electrode. The current collecting foil of the first bipolar electrode is thicker than the current collecting foil of the second bipolar electrode. The first bipolar electrode is positioned so as to be closer to a center in the plane-perpendicular direction than the second bipolar electrode is.

In the IH, it is thought that individual cells are heated mainly by the heat generation of the current collecting foil (electric conductor). For example, it is thought that the thickness of the bipolar battery increases with the increase in the capacity of the bipolar battery. In a thick bipolar battery, there is a possibility that a temperature difference is generated by a skin effect, between a current collecting foil positioned at an outer side in the lamination direction (plane-perpendicular direction) and a current collecting foil positioned at a central side. There is a possibility that the generation of the temperature difference decreases the emission efficiency of the electrolytic solution. Since a thick current collecting foil is disposed at the center in the lamination direction, it is expected that eddy current increases and the amount of heat generation increases at the center in the lamination direction. Thereby, it is expected that the temperature difference between the current collecting foil positioned at the outer side in the lamination direction and the current collecting foil positioned at the central side is reduced. By the reduction in temperature difference, it is expected that the emission efficiency of the electrolytic solution is improved.

5. The bipolar battery according to the "4" may include the following configuration, for example. A liquid inlet hole may be provided on each of the cells. The seal material may include a first seal material and a second seal material. The first seal material may fill the gap between the adjacent bipolar electrodes. The second seal material may close the liquid inlet holes. The second seal material may have a film shape.

For example, a hole is bored in the second seal material having a film shape, by a needle-shaped jig or the like, and thereby, the liquid inlet hole can be easily opened. The opened liquid inlet hole can be used as the gas outlet hole at the time of the retrieval of the electrolytic solution.

An embodiment of the present disclosure (occasionally abbreviated as "the embodiment" hereinafter) will be described below. The embodiment does not limit the technical scope of the present disclosure. The embodiment is an example in all respects. The embodiment is a non-limitative embodiment. The technical scope of the present disclosure includes all alterations within meanings and ranges equivalent to descriptions in the claims. From the beginning, it is assumed that arbitrary configurations are extracted from the embodiment and are arbitrarily combined, for example.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic perspective view of a bipolar battery in the embodiment;
FIG. 2 is a schematic sectional view along line II-II in FIG. 1;
FIG. 3 is a schematic sectional view along line III-III in FIG. 1;
FIG. 4 is a schematic sectional view along line IV-IV in FIG. 1;
FIG. 5 is a schematic sectional view showing an exemplary lamination configuration in the embodiment;
FIG. 6 is a schematic plan view showing an exemplary bipolar electrode in the embodiment;
FIG. 7 is a schematic flowchart showing a method of producing a recycled material in the embodiment;
FIG. 8 is a schematic sectional view showing an exemplary boring jig in the embodiment;
FIG. 9 is a first schematic view showing an exemplary heating jig in the embodiment;
FIG. 10 is a second schematic view showing an exemplary heating jig in the embodiment; and
FIG. 11 is a schematic sectional view showing an exemplary retrieving jig in the embodiment.

### DETAILED DESCRIPTION OF EMBODIMENTS

### Terms and Phrases

"Comprising", "including", "having", and modifications thereof are open-end expressions. A configuration shown by an open-end expression may further include an additional element in addition to an essential element, or may include no additional element.

Unless otherwise mentioned, execution orders of a plurality of steps, actions, operations, and others included in various methods are not limited to description orders. For example, a plurality of steps may be promoted simultaneously. For example, a plurality of steps may be promoted in tandem.

Geometric terms should not be understood as strict meanings. Examples of geometric terms include "parallel", "perpendicular", and "orthogonal". For example, directions, angles, distances, and others may be relatively displaced in ranges in which substantially identical or similar functions are obtained. For example, geometric terms can include tolerances, errors and others in design, work, production, and others. Dimension relations in the figures sometimes do not coincide with the actual dimension relations. To facilitate understanding by readers, dimension relations in the figures are sometimes altered. For example, lengths, widths, thicknesses, and others are sometimes altered. Some configurations are sometimes excluded.

A "plane-perpendicular direction" indicates a normal direction with respect to a surface of a sheet-shaped member (for example, a foil or an electrode). An "in-plane direction" indicates an arbitrary direction orthogonal to the plane-perpendicular direction. In the figures in the embodiment, a Z-axis direction corresponds to the plane-perpendicular direction. An X-axis direction and a Y-axis direction are examples of the in-plane direction.

### Bipolar Battery

A bipolar battery can have an arbitrary configuration, as long as the bipolar battery has a bipolar structure and includes an electrolytic solution. In some embodiments, the bipolar battery can be a lithium-ion battery. In some embodiments, the bipolar battery can be a nickel-hydrogen battery. As an example, the embodiment as the lithium-ion battery will be described below.

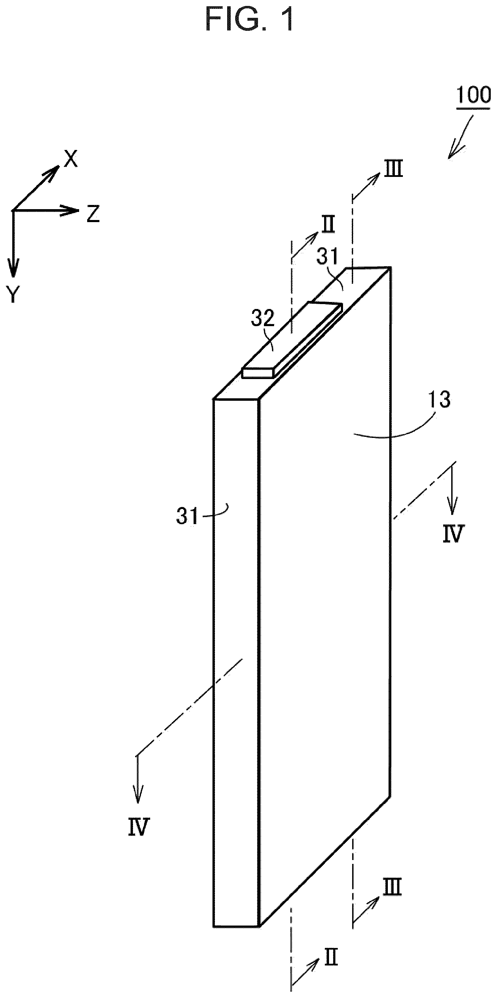

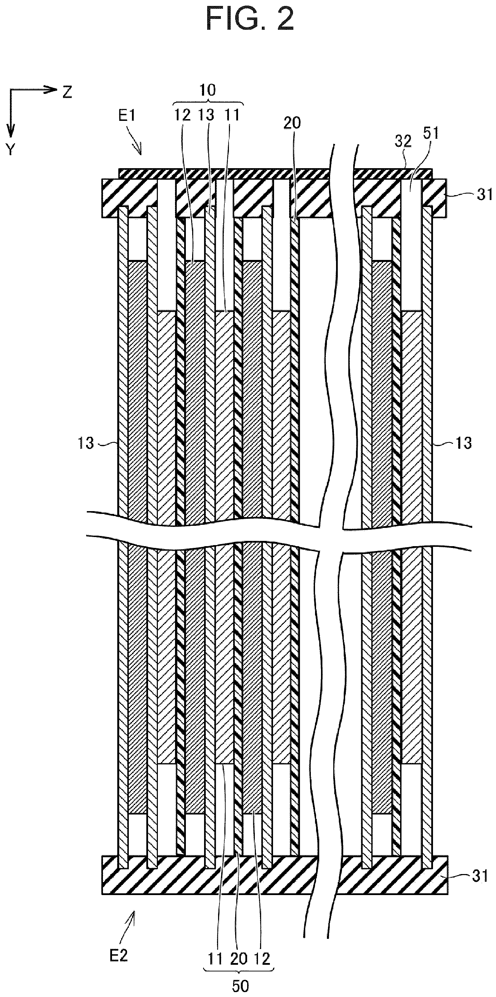

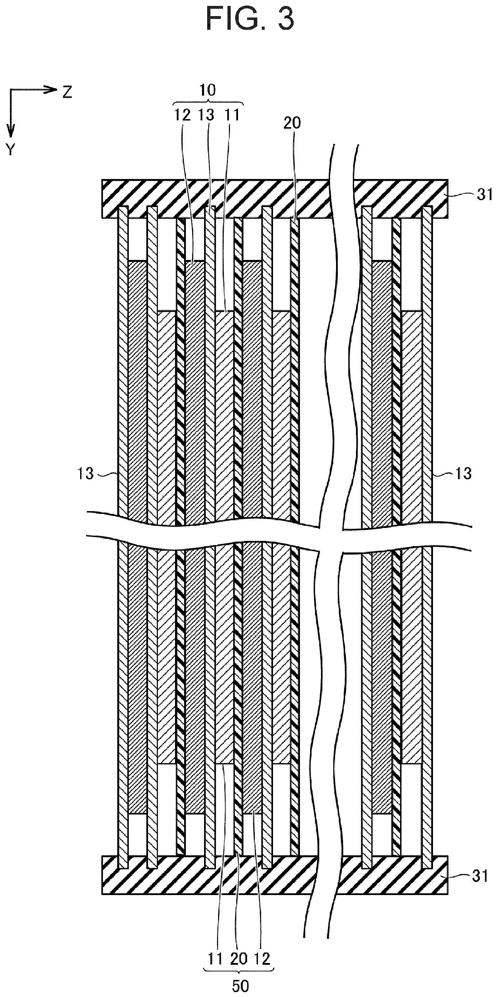

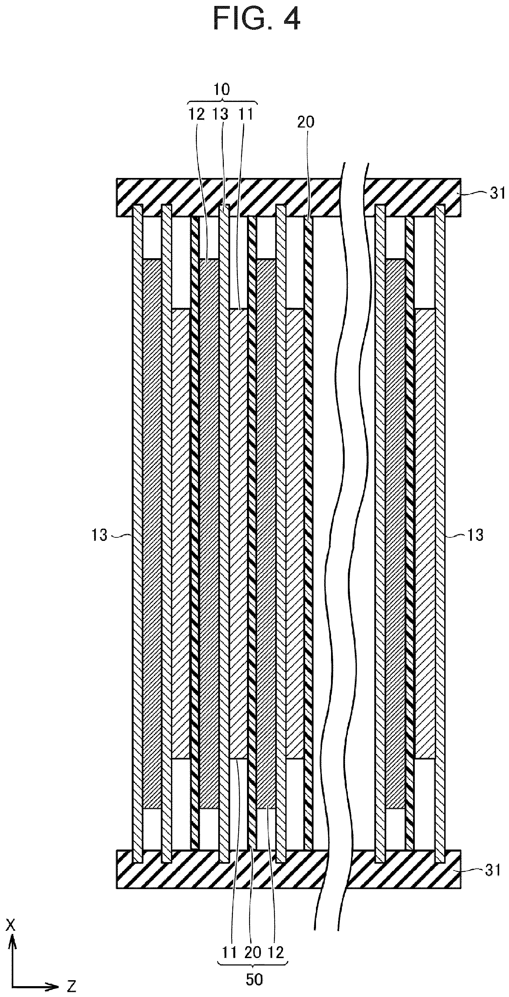

FIG. 1 is a schematic perspective view of a bipolar battery in the embodiment. FIG. 2 is a schematic sectional view along line II-II in FIG. 1. FIG. 3 is a schematic sectional view along line III-III in FIG. 1. FIG. 4 is a schematic sectional view along line IV-IV in FIG. 1.

A bipolar battery 100 includes a plurality of bipolar electrodes 10, a first seal material 31, and an electrolytic solution (not illustrated). The bipolar battery 100 may further include separators 20, a second seal material 32, and others. The bipolar electrodes 10 are laminated in the plane-perpendicular direction (Z-axis direction). Hereinafter, the plane-perpendicular direction (Z-axis direction) is also referred to as a "lamination direction". Each of the bipolar electrodes 10 includes a positive electrode layer 11, a current collecting foil 13, and a negative electrode layer 12 in this order in the plane-perpendicular direction.

The current collecting foil 13 is an electric conductor. For example, the current collecting foil 13 may include a metal foil or the like. The current collecting foil 13 may be formed by bonding an aluminum (Al) foil and a copper (Cu) foil, for example.

The positive electrode layer 11 is attached to the current collecting foil 13. The positive electrode layer 11 contains a positive electrode active material. The positive electrode active material may contain a lithium-nickel composite oxide or an olivine phosphate compound, for example. The positive electrode layer 11 may further contain a conductive material and a binder, for example.

The negative electrode layer 12 is attached to the current collecting foil 13. The negative electrode layer 12 is positioned on an opposite surface of the current collecting foil 13 from the positive electrode layer 11. The negative electrode layer 12 has a larger area than the positive electrode layer 11. The negative electrode layer 12 contains a negative electrode active material. The negative electrode active material may contain graphite, silicon, silicon oxide, a silicon-carbon composite, or a lithium-titanium composite material, for example. The negative electrode layer 12 may further contain a conductive material and a binder, for example.

The separator 20 is interposed between bipolar electrodes 10. The separator 20 electrically separates the positive electrode layer 11 and the negative electrode layer 12 that are adjacent in the plane-perpendicular direction. The separator 20 may include a porous resin film, for example.

At an edge in the in-plane direction, the first seal material 31 fills gaps among the bipolar electrodes 10 (among the current collecting foils 13). That is, at least a part of the seal member fills the gap between the adjacent bipolar electrodes 10. Thereby, a plurality of cells 50 is formed. The first seal material 31 may contain a polyolefin resin, an epoxy resin, an acryl resin, or a fluorine resin, for example.

The cell 50 is the smallest unit of batteries. Because of including the plurality of cells 50, the bipolar battery 100 can be also referred to as a "bipolar module". Each of the cells 50 is sealed. That is, the bipolar battery 100 is sealed. The cells 50 are isolated from each other. Each of the cells 50 includes the positive electrode layer 11, the separator 20, the negative electrode layer 12, and the electrolytic solution. That is, each of the cells 50 is filled with the electrolytic solution. The electrolytic solution is a liquid electrolyte. The electrolytic solution may contain an organic solvent and a supporting electrolyte (lithium salt), for example.

A liquid inlet hole 51 may be formed on each of the cells 50. For example, the liquid inlet hole 51 (through-hole) may be formed on the first seal material 31. At the time of the production of the bipolar battery 100, the electrolytic solution is injected in the cell 50 from the liquid inlet hole 51. After the injection of the electrolytic solution, the liquid inlet hole 51 may be closed by the second seal material 32. For example, the second seal material 32 may be thermally welded to the first seal material 31. The second seal material 32 may have a film shape, for example. The second seal material 32 may include a metal foil laminate film, for example. The second seal material 32 may include an aluminum laminate film, for example. In addition to the liquid inlet hole 51, for example, a gas emission valve may be further provided on each of the cells 50.

The bipolar battery 100 may further include an outer packaging body (not illustrated). For example, the whole of the bipolar electrodes 10, the first seal material 31, and the second seal material 32 may be packaged by the outer packaging body. The outer packaging body may include a metal foil laminate film, for example.

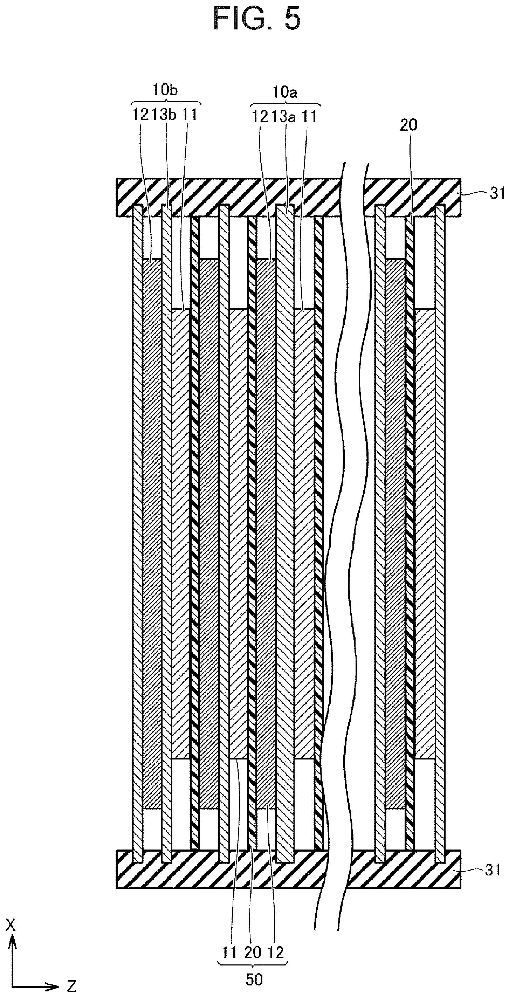

FIG. 5 is a schematic sectional view showing an exemplary lamination configuration in the embodiment. In some embodiments, the thicknesses of the current collecting foils 13 of the bipolar electrodes 10 may be the same. In some embodiments, the thicknesses of the current collecting foils 13 of the bipolar electrodes 10 may be different from each other. There is a possibility that the heating efficiency by IH is improved due to the difference in the thickness of the current collecting foil 13.

For example, the bipolar electrodes 10 may include a first bipolar electrode 10a and a second bipolar electrode 10b. A first current collecting foil 13a of the first bipolar electrode 10a is thicker than a second current collecting foil 13b of the second bipolar electrode 10b. The first bipolar electrode 10a is positioned so as to be closer to the center in the plane-perpendicular direction (lamination direction) than the second bipolar electrode 10b is. For example, the first bipolar electrode 10a may be positioned at the center in the lamination direction. For example, the second bipolar electrode 10b may be positioned at each of both ends in the lamination direction. The ratio of the thickness of the first current collecting foil 13a to the thickness of the second current collecting foil 13b may be 1.01 or more, 1.05 or more, 1.1 or more, or 1.2 or more, for example. The ratio of the thickness of the first current collecting foil 13a to the thickness of the second current collecting foil 13b may be 2.0 or less, 1.5 or less, or 1.2 or less, for example.

For example, the thickness of the current collecting foil 13 may increase in stages from both ends in the lamination direction (Z-axis direction) to the center in the lamination direction (Z-axis direction). The ratio between the thicknesses of the current collecting foils 13 of adjacent bipolar electrodes 10 may be 1.01 or more, 1.05 or more, 1.1 or more, or 1.2 or more, for example. The ratio between the thicknesses of the current collecting foils 13 of adjacent bipolar electrodes 10 may be 2.0 or less, 1.5 or less, or 1.2 or less, for example. The thickness of the second current collecting foil 13b (or the thinnest current collecting foil 13) may be 5 µm or more, 10 µm or more, 25 µm or more, or 50 µm or more, for example. The thickness of the second current collecting foil 13b (or the thinnest current collecting foil 13) may be 100 µm or less, 75 µm or less, or 50 µm or less, for example.

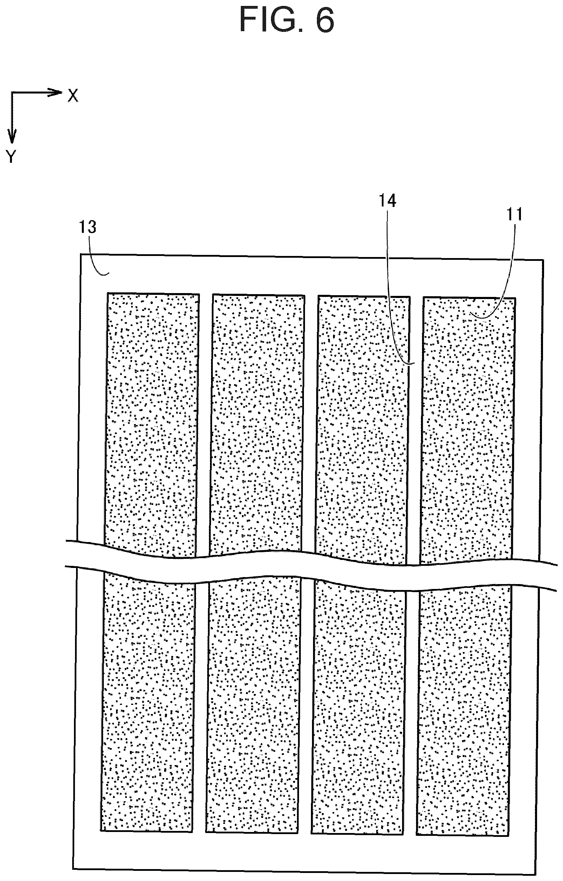

FIG. 6 is a schematic plan view showing an exemplary bipolar electrode in the embodiment. A groove 14 may be formed on at least one of the positive electrode layer 11 and the negative electrode layer 12. In FIG. 6, as an example, the groove 14 is formed on the positive electrode layer 11. The groove 14 may be formed also on the negative electrode layer 12 (back surface) similarly. The groove 14 is a portion that is depressed so as to be lower than the surface of the electrode layer. At a bottom portion of the groove 14, the current collecting foil 13 may be exposed. At the bottom portion of the groove 14, the positive electrode layer 11 may be formed. For example, the groove 14 may extend linearly. For example, the groove 14 may extend along an inflow direction (Y-axis direction) of the electrolytic solution from the liquid inlet hole 51. For example, the extending direction of the groove 14 may be parallel to the inflow direction of the electrolytic solution. The groove 14 can serves as a penetration path of the electrolytic solution. Since the groove 14 extends along the inflow direction of the electrolytic solution, it is expected that the penetration of the electrolytic solution is promoted at the time of the injection of the electrolytic solution. A single groove 14 may be formed. A plurality of grooves 14 may be formed. The grooves 14 may be arrayed in parallel (in a stripe manner).

### Method of Producing Recycled Material

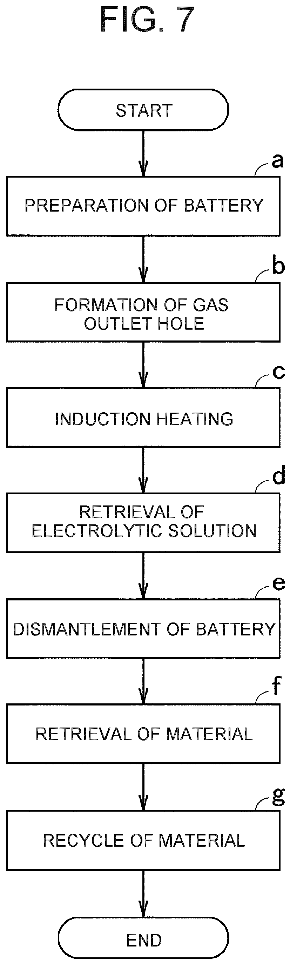

FIG. 7 is a schematic flowchart showing a method of producing a recycled material in the embodiment. Hereinafter, "the method of producing the recycled material in the embodiment" is occasionally abbreviated as "the present method". The present method includes "(a) Preparation of Battery", "(b) Formation of Gas Outlet Hole", "(c) Induction Heating", and "(d) Retrieval of Electrolytic Solution". The present method may further include "(e) Dismantlement of Battery", "(f) Retrieval of Material", and "(g) Recycle of Material", for example.

### (a) Preparation of Battery

The present method includes preparing the bipolar battery 100. Details of the bipolar battery 100 have been described above. That is, the above-described bipolar battery 100 may be a battery that is utilized for the present method. For example, a used battery that has deteriorated may be prepared. For example, a defective battery that has been made in the production process may be prepared.

### (b) Formation of Gas Outlet Hole

The present method includes forming a gas outlet hole on the bipolar battery 100. The gas outlet hole is formed on each of the cells 50. On each cell 50, the gas outlet hole can be formed at an arbitrary position. For example, as shown in FIG. 2, the bipolar battery 100 may include a first end portion E1 and a second end portion E2 in one direction (for example, the Y-axis direction) orthogonal to the plane-perpendicular direction. The second end portion E2 is positioned on the opposite side of the first end portion E1. For example, the gas outlet hole may be formed at the first end portion E1.

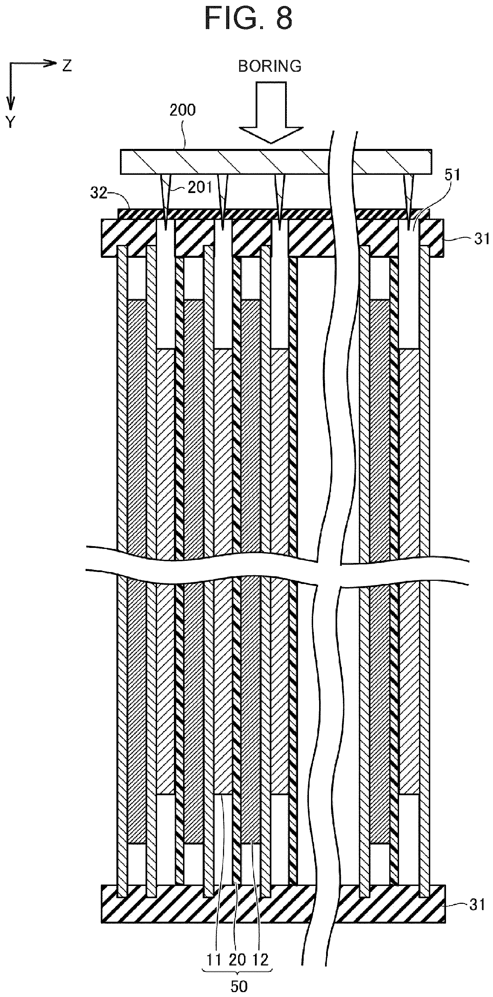

The gas outlet hole can be formed by an arbitrary method. FIG. 8 is a schematic sectional view showing an exemplary boring jig in the embodiment. For example, in the case where the cell 50 includes the liquid inlet hole 51, a hole may be bored in the second seal material 32 having a film shape, and thereby, the gas outlet hole may be formed. For example, a boring jig 200 that is a jig having a plurality of needle-shaped portions 201 is used. Thereby, gas outlet holes are formed on the respective cells 50, easily and concurrently.

In the case where the cell 50 includes the gas emission valve (not illustrated), the gas emission valve may be opened. However, the gas emission valve ordinarily includes a metal member. Therefore, in the case of the opening with a needle or the like, it is thought that it is harder for a failure such as short circuit to occur when the liquid inlet hole 51 is opened than when the gas emission valve is opened.

### (c) Induction Heating

The present method includes vaporizing at least some of the electrolytic solution by heating the bipolar battery 100 by the IH. All of the electrolytic solution may be vaporized. Some of the electrolytic solution may be vaporized. For example, only the organic solvent contained in the electrolytic solution may be vaporized. For example, the supporting electrolyte may remain in the battery, without being vaporized. An arbitrary heating method may be adopted as long as the bipolar battery 100 is heated by the IH.

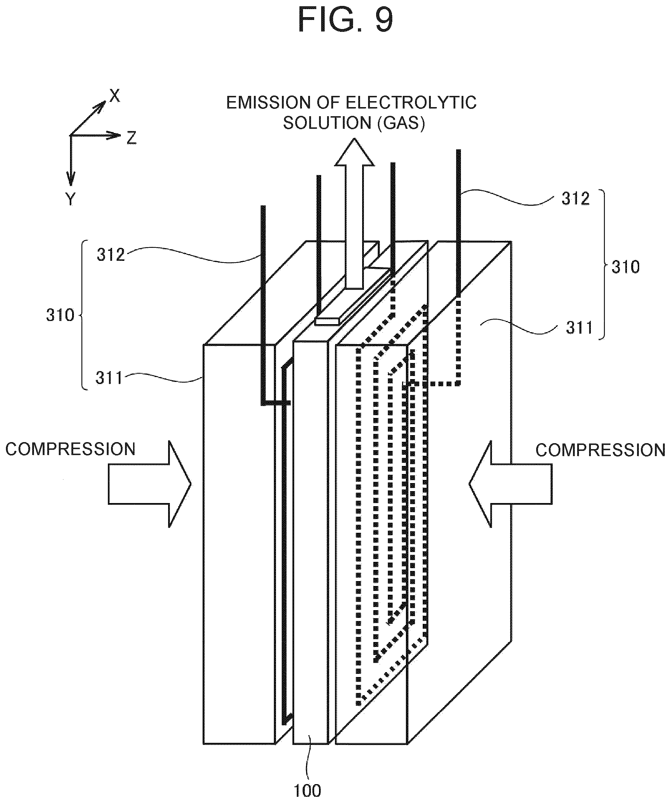

FIG. 9 is a first schematic view showing an exemplary heating jig in the embodiment. Each of first heating jigs 310 includes a constraining plate 311 and a first heating coil 312. The first heating coil 312 is a flat-type coil. High-frequency current flows through the first heating coil 312, and thereby, eddy current can be generated in an electric conductor (for example, the current collecting foil 13) in the battery. The first heating coil 312 is held by the constraining plate 311. The first heating coil 312 is spread in the in-plane direction over the whole of the constraining plate 311. The bipolar battery 100 is sandwiched between a pair of constraining plates 311. The constraining plates 311 are configured to compress the bipolar battery 100 in the plane-perpendicular direction (Z-axis direction). The first heating jig 310 makes it possible to heat the bipolar battery 100, while compressing the bipolar battery 100. By the compression, the expansion of each cell 50 can be restrained. As a result, it is expected that the heating efficiency (that is, the vaporization efficiency of the electrolytic solution) is improved.

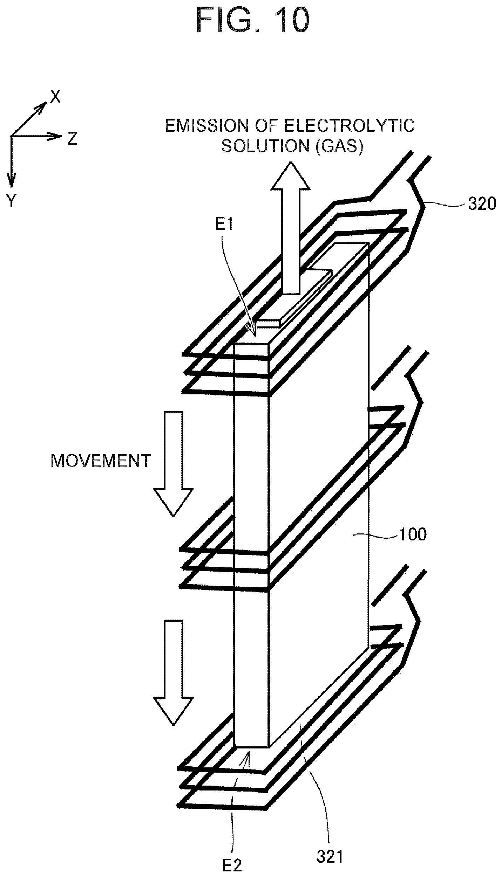

FIG. 10 is a second schematic view showing an exemplary heating jig in the embodiment. The second heating jig 320 includes a second heating coil. The second heating coil is an air core coil having a ring shape. An air core portion 321 of the second heating coil may have a shape that is formed along the outer shape of the bipolar battery 100. High-frequency current flows through the second heating coil, and thereby, eddy current can be generated locally in the battery. The bipolar battery 100 may pass through the air core portion 321. That is, the present method may include moving the heating coil along an outer surface of the bipolar battery 100. The second heating jig 320 makes it possible to locally heat the bipolar battery 100 and to move the heating spot.

For example, the second heating jig 320 (heating coil) may start from the first end portion E1 where the gas outlet hole (liquid inlet hole 51) is formed, and move toward the second end portion E2 on the opposite side. The bipolar battery 100 is sequentially heated from the side of the gas outlet hole (the outlet of the gas). Thereby, the electrolytic solution can be sequentially vaporized, while movement routes of the gas are secured. Consequently, it is expected that the emission efficiency of the gas is improved.

Furthermore, in the case where the groove 14 is formed on at least one of the positive electrode layer 11 and the negative electrode layer 12 as shown in FIG. 6, the movement direction of the second heating jig 320 (heating coil) may be along the extending direction (Y-axis direction) of the groove 14, for example. The groove 14 can serve as a movement path of the gas (electrolytic solution). Since the movement direction of the heating coil is along the extending direction of the groove 14, it is expected that the emission efficiency of the gas is further improved. For example, the movement direction of the heating coil may be parallel to the extending direction of the groove 14.

### (d) Retrieval of Electrolytic Solution

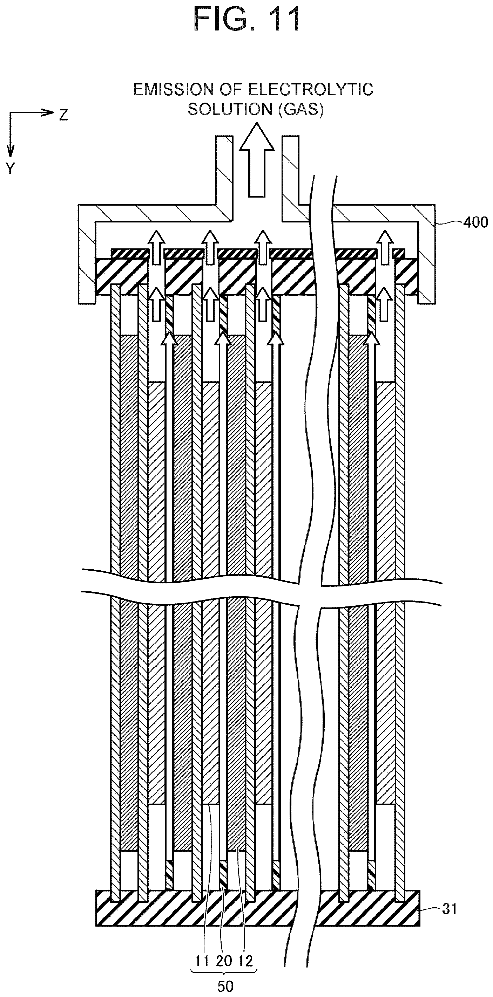

The present method includes retrieving the vaporized electrolytic solution from the gas outlet hole. An arbitrary retrieval method is adopted. FIG. 11 is a schematic sectional view showing an exemplary retrieving jig in the embodiment. A retrieval jig 400 (retrieval joint) is configured to cover the gas outlet holes (liquid inlet holes 51) together. An arrow in FIG. 11 shows an example of the movement path of the electrolytic solution (gas). The retrieval jig 400 makes it possible to efficiently retrieve the gas from each of the cells 50. The retrieved gas may be liquefied by being cooled. The recycled material may be produced from the retrieved electrolytic solution (organic solvent). The retrieved organic solvent may be reused.

### (e) Dismantlement of Battery

For example, the present method may include dismantling the bipolar battery 100 after the retrieval of the electrolytic solution. Because of the dismantlement after the retrieval of the electrolytic solution, it is expected that it is hard for a failure such as short circuit to occur at the time of the dismantlement, for example. Consequently, it is expected that the working efficiency at the time of the dismantlement is improved, for example.

### (f) Retrieval of Material

The present method may include retrieving various materials and members from the battery after the dismantlement of the bipolar battery 100. For example, the positive electrode active material and the current collecting foil may be retrieved.

### (g) Recycle of Material

For example, the present method may include producing the recycled material from the retrieved material. For example, the retrieved material or member may be used as the recycled material with no change (direct recycle). The retrieved material or member may be processed, and thereby, various recycled materials may be produced. For example, the positive electrode active material may be reproduced from a metal component extracted from the positive electrode active material.

## Claims

1. A method of producing a recycled material comprising:
(a) preparing a bipolar battery that includes an electrolytic solution and that is sealed;
(b) forming a gas outlet hole on the bipolar battery;
(c) vaporizing at least some of the electrolytic solution by heating the bipolar battery by induction heating; and
(d) retrieving the vaporized electrolytic solution from the gas outlet hole, wherein:
the bipolar battery includes a plurality of bipolar electrodes and a seal material;
the bipolar electrodes are laminated in a plane-perpendicular direction;
each of the bipolar electrodes includes a positive electrode layer, a current collecting foil, and a negative electrode layer in this order in the plane-perpendicular direction;
at least a part of the seal material fills a gap between the adjacent bipolar electrodes, such that a plurality of cells is provided;
the cells are isolated from each other;
the cells include the positive electrode layer, the negative electrode layer, and the electrolytic solution; and
in the (b), the gas outlet hole is formed on each of the cells.

2. The method according to claim 1, wherein the (c) includes performing the induction heating while compressing the bipolar battery in the plane-perpendicular direction.

3. The method according to claim 1, wherein:
the (c) includes moving a heating coil along an outer surface of the bipolar battery;
the bipolar battery includes a first end portion and a second end portion in one direction orthogonal to the plane-perpendicular direction;
the second end portion is positioned on an opposite side of the first end portion;
the gas outlet hole is formed at the first end portion;
the heating coil starts from the first end portion and moves toward the second end portion;
a groove is provided on at least one of the positive electrode layer and the negative electrode layer; and
the groove extends along a movement direction of the heating coil.

4. A bipolar battery comprising:
a plurality of bipolar electrodes;
a seal material; and
an electrolytic solution, wherein:
the bipolar electrodes are laminated in a plane-perpendicular direction;
each of the bipolar electrodes includes a positive electrode layer, a current collecting foil, and a negative electrode layer in this order in the plane-perpendicular direction;
at least a part of the seal material fills a gap between the adjacent bipolar electrodes, such that a plurality of cells is provided;
the cells are isolated from each other;
the cells include the positive electrode layer, the negative electrode layer, and the electrolytic solution;
the bipolar electrodes include a first bipolar electrode and a second bipolar electrode;
the current collecting foil of the first bipolar electrode is thicker than the current collecting foil of the second bipolar electrode; and
the first bipolar electrode is positioned so as to be closer to a center in the plane-perpendicular direction than the second bipolar electrode is.

5. The bipolar battery according to claim 4, wherein:
a liquid inlet hole is provided on each of the cells;
the seal material includes a first seal material and a second seal material;
the first seal material fills the gap between the adjacent bipolar electrodes;
the second seal material closes the liquid inlet holes; and
the second seal material has a film shape.
